# EUROPÄISCHE PATENTSCHRIFT

(11) **EP 4 532 327 B1**
(45) Veröffentlichungstag und Bekanntmachung des Hinweises auf die Patenterteilung: **29.07.2026**
(21) Anmeldenummer: 23734459.3
(22) Anmeldetag: 31.05.2023
(51) Int. Cl.: B64D 27/20, B64D 31/04, B64D 31/06

(54) **LEISTUNGSREGELEINHEIT ZUM AUTOMATISIERTEN REGELN EINES ANTRIEBS SOWIE LUFTFAHRZEUG**
POWER CONTROL UNIT FOR AUTOMATICALLY CONTROLLING A DRIVE, AND AIRCRAFT
UNITÉ DE COMMANDE DE PUISSANCE POUR COMMANDER AUTOMATIQUEMENT UN ENTRAÎNEMENT, ET AÉRONEF

(30) Priorität: 01.06.2022 DE 102022113828
(43) Veröffentlichungstag der Anmeldung: 09.04.2025
(73) Patentinhaber: Brach, Reiner, 27711 Osterholz-Scharmbeck (DE)
(72) Erfinder: Brach, Reiner, 27711 Osterholz-Scharmbeck (DE)
(74) Vertreter: Weidner Stern Jeschke
(86) Internationale Anmeldenummer: PCT/DE2023/200109
(87) Internationale Veröffentlichungsnummer: WO 2023/232205

(56) Entgegenhaltungen:
- US-A- 5 855 340
- US-A1- 2005 178 890
- US-A1- 2015 142 215
- US-A1- 2017 305 571
- US-A1- 2018 134 403
- US-A1- 2019 176 997
- US-A1- 2020 362 753

## Beschreibung

Die Erfindung betrifft eine Leistungsregeleinheit zum automatisierten Regeln eines Antriebs eines in einem Normalbetriebszustand befindlichen Luftfahrzeuges mit einer Regelungseinrichtung und einer Eingabeeinrichtung, wobei das Luftfahrzeug zum Fliegen in Umgebungsluft mittels dynamischen Auftriebs zum Überwinden eines Eigengewichts ausgebildet ist, ein zum Erzeugen von einem ersten Antriebsschub eingerichtetes erstes Triebwerk mit einem ersten Leerlaufschub und einem ersten Maximalschub und zumindest ein zum Erzeugen von zweiten Antriebsschub eingerichtetes zweites Triebwerk mit einem zweiten Leerlaufschub und einem zweiten Maximalschub aufweist und mittels des jeweiligen Antriebsschubs relativ zur Umgebungsluft beschleunigbar ist und wobei mittels der Eingabeeinrichtung eine Vorgabeleistung durch einen Bediener eingebbar ist.

Bekannte Leistungsregeleinheiten, die beispielsweise in Form eines Schubhebels mit dazugehöriger Steuerungselektronik ausgeführt sind, weisen zum Steuern von unterschiedlichen Triebwerken beispielsweise zwei parallel zueinander angeordnete Schubhebel, davon jeweils ein Schubhebel für jedes Triebwerk, auf. Dabei werden im normalen Flugbetrieb üblicherweise beide Triebwerke jeweils parallel zueinander geregelt, sodass beispielsweise ein gleicher Antriebsschub von beiden Triebwerken zum Erreichen eines Gesamtantriebsschubs abgegeben wird.

Dabei werden beide Triebwerke gleichmäßig belastet, was allerdings auch einen gleichmäßigen, häufig zeitabhängigen Verschleiß beider Triebwerke nach sich zieht. Zudem sind beide Triebwerke über einen langen Zeitraum im Bereich einer teilweisen Leistungsabgabe betrieben. Dadurch entstehen Nachteile in der Effizienz.

Weiterhin sind Systeme bekannt, welche einen sicheren Betrieb eines mehrmotorigen Luftfahrzeuges bei einem Triebwerksausfall ermöglichen. Die US 2020/0362753 A1 zeigt hierzu ein Regeln zweier Triebwerke eines Helikopters derart, dass ein Triebwerk in einem Standby-Modus gehalten und in seiner Leistung gesteigert wird, sofern ein anderes Triebwerk einen Leistungsverlust zeigt. Es ist dabei jedoch keine konkrete Steuerungseinheit offenbart

Die US 6,880,784 B1 beschreibt ein automatisches Regeln von Startschub für ein Überschallflugzeug zum Reduzieren von Lärm. Hierbei erfolgt ein reduzieren einer Triebwerksleistung für einzelne Flugphasen.

Aus der US 2005/0178890 A1 ist bekannt, Schub verschiedener Triebwerke unterschiedlicher Leistungsklassen in einem Luftfahrzeug ungleichmäßig zu nutzen.

Die US 2014/0117148 A1 beschreibt ein Verfahren zum Steuern von Triebwerken und Begegnen eines Triebwerksausfalls bei einem Helikopter mit Hybridantrieb. Dabei werden Leistungsverluste mittels eines jeweils anderen Antriebssystems unterschiedlicher Antriebstechnologien aufgefangen.

Ebenso offenbart die US 2020/0277064 A1 das Steuern eines Luftfahrzeuges mit Hybridantrieb.

Die US 2021/0323425 A1 betrifft ein Ladesystem für elektrische Antriebseinheiten eines Luftfahrzeuges und offenbart das Unterstützen eines Haupttriebwerkes mit einem elektrischen Antrieb.

Aus der US 5,855,340 A ist ein Geschäftsflugzeug mit zwei Triebwerken bekannt, wobei die beiden Triebwerke unterschiedlich leistungsstark sind.

Die US 4,456,204 zeigt ein Flugzeug mit einer im Seitenleitwerk angeordneten Ansaugöffnung für ein drittes, im Rumpfheck angeordnetes, Triebwerk.

Die EP 4 059 837 A1 offenbart ein Hybrid-Antriebssystem für einen Helikopter. Dabei wird mittels einer Steuerungseinrichtung ein System aus Verbrennungstriebwerk und elektrischem Antrieb gesteuert.

Zudem ist es aus "Wikipedia: Hawker Siddeley Trident" bekannt, zum Verkürzen einer Startstrecke eines Verkehrsflugzeuges ein zusätzliches Triebwerk zur zeitlich begrenzten Leistungssteigerung einzusetzen.

Aufgabe der Erfindung ist es, den Stand der Technik zu verbessern.

Gelöst wird die Aufgabe durch eine Leistungsregeleinheit zum automatisierten Regeln eines Antriebs eines in einem Normalbetriebszustand befindlichen Luftfahrzeuges mit einer Regelungseinrichtung und einer Eingabeeinrichtung, wobei das Luftfahrzeug zum Fliegen in Umgebungsluft mittels dynamischen Auftriebs zum Überwinden eines Eigengewichts ausgebildet ist, ein zum Erzeugen von einem ersten Antriebsschub eingerichtetes erstes Triebwerk mit einem ersten Leerlaufschub und einem ersten Maximalschub und zumindest ein zum Erzeugen von zweitem Antriebsschub eingerichtetes zweites Triebwerk mit einem zweiten Leerlaufschub und einem zweiten Maximalschub aufweist und mittels des jeweiligen Antriebsschubs relativ zur Umgebungsluft beschleunigbar ist und wobei mittels der Eingabeeinrichtung eine Vorgabeleistung durch einen Bediener eingebbar ist, wobei die Regelungseinrichtung derart eingerichtet ist, dass im Normalbetriebszustand der erste Antriebsschub und der zweite Antriebsschub mittels der Regelungseinrichtung abhängig von der Vorgabeleistung bei einer ansteigenden Vorgabeleistung derart relativ zueinander geregelt sind, dass zunächst das erste Triebwerk mit einem ansteigenden ersten Antriebsschub geregelt wird und erst nach Erreichen eines ersten oberen Grenzschubs des ersten Triebwerks der zweite Antriebsschub ansteigend, jeweils bis zum Erreichen einem der Vorgabeleistung entsprechenden gemeinsamen Antriebsschub geregelt wird. Dabei weist die Eingabeeinrichtung zumindest eine adaptive Leistungsmarkierung auf, wobei die adaptive Leistungsmarkierung oder die jeweilige adaptive Leistungsmarkierung zum Ausgeben einer optischen und/oder einer haptischen Rückmeldung eines verfügbaren gemeinsamen Antriebsschubs, eines verfügbaren jeweiligen Maximalschubs des jeweiligen Triebwerks und/oder zum Ausgeben einer optischen und/oder einer haptischen Rückmeldung über das Vorliegen einer Störung eingerichtet ist.

Kerngedanke der Erfindung ist hierbei, den jeweils zur Verfügung stehenden, ansteigenden ersten Antriebsschub des ersten Triebwerks zunächst bis zum Erreichen des ersten oberen Grenzschubs auszunutzen und erst dann den Antriebsschub des zweiten Triebwerks, ausgehend von beispielsweise einer Leerlaufleistung, ansteigend zu nutzen. Damit wird beispielsweise bei Nutzung eines Teil-Antriebsschubs, wie dieser beispielsweise für eine Reiseflugtätigkeit notwendig ist, das zweite Triebwerk nur im Leerlauf betrieben, wodurch beispielsweise eine von der Belastung abhängige Verschleißüberwachung keinerlei wartungsrelevante Abnutzung registriert. Insgesamt wird damit in bestimmten Betriebszuständen das zweite Triebwerk geschont. Weiterhin ist es erfindungsgemäß möglich, dass, beispielsweise bei einem Ausfall des ersten Triebwerks, das zweite Triebwerk bereits in Leerlaufleistung betrieben ist und damit zum Bereitstellen von Antriebsschub zur Verfügung steht. Um einem Bediener, insbesondere einen Piloten des Luftfahrzeugs, dabei eine entsprechende Rückmeldung über verfügbare Antriebsschübe zu ermöglichen, ist die adaptive Leistungsmarkierung vorgesehen und kann insbesondere adaptiv eine Rückmeldung über den Zustand des Antriebsystems geben.

Folgende Begriffe seien in diesem Zusammenhang erläutert:
Eine "Leistungsregeleinheit" ist beispielsweise ein Steuerungscomputer, eine Recheneinrichtung oder eine andere elektronische Einrichtung zum Regeln einer Leistung eines Antriebs. In einer einfachen Form kann dabei eine solche Leistungsregeleinheit auch mechanisch realisiert sein, wobei insbesondere elektronische Systeme, die auch FADEC genannt werden, zum Einsatz kommen.

Ein "automatisiertes Regeln" beschreibt dabei, dass anhand einer eingegebenen Leistung, welche beispielsweise durch einen Piloten vorgegeben wird, die entsprechenden Parameter eines entsprechenden Triebwerks automatisiert, nämlich mittels der Leistungsregeleinheit, so geregelt werden, dass die Vorgaben des Bedieners berücksichtigt sind.

Die Leistungsregeleinheit weist dabei eine "Regelungseinrichtung", also eine Recheneinrichtung, welche entsprechende Eingabesignale und Ausgabesignale verarbeitet, und eine "Eingabeeinrichtung", also eine Einrichtung zum Eingeben einer beispielsweise Vorgabeleistung durch einen Bediener, auf. Die Regelungseinrichtung kann dabei in einer einfachen Ausführung beispielsweise in Form eines mechanischen Reglers ausgeführt sein, ist allerdings üblicherweise elektronisch ausgeführt und ist damit dazu einreichtet, auch andere Signale, beispielsweise von einem Autopiloten, empfangen und diese innerhalb der Leistungsregeleinheit in Bezug auf den angeforderten Antriebsschub verarbeiten zu können. Hierbei kann die Regelungseinrichtung auch unterschiedliche Sub-System, beispielsweise jeweils für das Regeln eines einzelnen Triebwerks aufweisen, wobei dann mittels eines übergeordneten Systems ein Vorgabewert für die gewünschte Leistung des jeweiligen Triebwerks an das jeweilige Sub-System weitergegeben wird. Die Regelungseinrichtung ist dabei insbesondere dazu eingerichtet, für den störungsfreien Betrieb eines jeweiligen Triebwerks notwendige technische Parameter selbständig zu regeln. Die Eingabeeinrichtung ist dabei beispielsweise eine mechanische Eingabeeinrichtung, die von einem Bediener bedienbar ist oder, wie erwähnt, ein Autopilot oder ein sogenanntes Auto-Throttle-System zum Vorgeben einer gewünschten Triebwerksleistung und/oder eines gewünschten Antriebsschubs.

Ein "Luftfahrzeug" beschreibt dabei insbesondere ein Flugzeug, welches durch eine Vorwärtsbewegung dynamischen Auftrieb entwickelt und damit sein Eigengewicht überwinden kann. Allerdings kann es sich bei dem Luftfahrzeug auch um einen Drehflügler, beispielsweise um einen Helikopter, handeln, welcher insbesondere mit mehreren Triebwerken angetrieben wird.

Ein "Normalbetriebszustand" eines Luftfahrzeuges beschreibt dabei den Zustand, in dem beispielsweise die für den Flug vorgesehenen Triebwerke betriebsbereit und unbeschädigt zur Verfügung stehen und das Luftfahrzeug seiner üblichen Bestimmung entsprechend eingesetzt werden kann, ohne dass Notfallmaßnahmen oder Ausweichmaßnahmen getroffen werden müssen.

Ein solches Luftfahrzeug wird mittels "Antriebsschub" angetrieben, also beispielsweise mittels entgegen einer Flugrichtung ausgestoßener Massenströme, wie diese beispielsweise durch ein Strahltriebwerk erzeugt werden. Dazu weist das Luftfahrzeug ein jeweiliges "Triebwerk" auf, wobei mit dem Begriff "Triebwerk" insbesondere die Gesamtheit aller notwendigen Bauteile und Einrichtungen bezeichnet ist, welche zum Erzeugen von Antriebsschub notwendig sind. Beispielsweise umfasst das jeweilige Triebwerk also eine Wärmekraftmaschine, einen Elektromotor oder eine andere mechanische Leistungsquelle, welche dann mittels zusätzlicher Bauteile, beispielsweise einem Propeller, Turbinenschaufeln oder dergleichen, Antriebsschub erzeugt. Ein solches Triebwerk ist gekennzeichnet durch einen "Leerlaufschub", also einem beispielsweise im Leerlauf des Triebwerks ausgegebenen Schub, und einen jeweiligen "Maximalschub", also den Schub, der durch das jeweilige Triebwerk technisch bedingt maximal abgegeben werden kann. Die entsprechenden Kennwerte können dabei beispielsweise unter einer sogenannten Norm-Atmosphäre oder auch für bestimmte Flugzustände, bestimmte Flughöhen oder dergleichen bestimmt sein. Kerngedanke ist hierbei, die jeweils minimal zur Verfügung stehende Leistungsfähigkeit des Triebwerks und die jeweils maximal zur Verfügung stehende Leistungsfähigkeit des Triebwerks zu charakterisieren.

Mittels des jeweiligen Antriebsschubs oder einer Summe aus Antriebsschub der jeweiligen Triebwerke ist dann das Luftfahrzeug relativ zur Umgebungsluft beschleunigbar, wodurch ein Flug ermöglicht ist. Dabei wird mittels der Eingabeeinrichtung eine "Vorgabeleistung" eingegeben, wobei diese Vorgabeleistung eine Repräsentanz der durch einen Bediener, beispielsweise einen Piloten oder auch einen Autopiloten, angeforderten Leistung für den jeweiligen Flugzustand darstellt. So wird beispielsweise die Vorgabeleistung für einen Start auf 100 % der verfügbaren Leistung gesetzt, wobei im Reiseflug lediglich beispielsweise 35 % des entsprechenden Antriebsschubs notwendig sind, um ein aerodynamisch entsprechend eingerichtetes Luftfahrzeug mit beispielsweise eingefahrenen Auftriebshilfen und eingefahrenem Fahrwerk in einem stationären Geradeausflug zu bewegen.

Erfindungsgemäß wird der jeweilige Antriebsschub derart "abhängig von der Vorgabeleistung" "relativ zueinander" geregelt. Damit ist beschrieben, dass abhängig von der Vorgabeleistung jeweilige Triebwerke unabhängig voneinander, jedoch mit dem Ziel eines Erzeugens eines gemeinsamen, insbesondere addierten Antriebsschubs gemäß der obigen Beschreibung geregelt sind.

Ein "oberer Grenzschub" beschreibt dabei eine entsprechend dem Flugzustand zur Verfügung stehende Leistungsfähigkeit des jeweiligen Triebwerks, bis zu welchem das betreffende Triebwerk zunächst mit ansteigender Leistung geregelt wird, bevor das jeweils andere Triebwerk aus einem Leerlaufschub in Richtung seines Maximalschubs geregelt wird. Hierbei kann der Grenzschub auch eine beispielsweise durch Wartungsvorgaben, Verschleißabschätzung oder gewünschte Treibstoffersparnis festgelegte Grenze für einen maximal verfügbaren Antriebsschub für das jeweilige Triebwerk sein.

Eine "adaptive Leistungsmarkierung" ist dabei beispielsweise ein an der Eingabeeinrichtung angeordneter adaptiver Leuchtbalken, eine entsprechende Leistungsraste für beispielsweise einen Schubhebel oder eine ähnlich wirkende technische Einrichtung, um einem Bediener eine optische und/oder eine haptische Rückmeldung geben zu können. Beispielsweise kann eine haptische Rückmeldung auch darin bestehen, dass beispielsweise ein Schubhebel in seiner Beweglichkeit durch die adaptive Leistungsmarkierung eingeschränkt wird, sofern die im Normalbetriebszustand erwartete maximale Antriebsleistung in Form eines gemeinsamen maximalen Antriebsschubs nicht zur Verfügung steht.

Um auch bei einem reduzierten Leistungsbedarf eine entsprechende Regelung der Triebwerke vornehmen zu können, ist die Regelungseinrichtung derart eingerichtet, dass im Normalbetriebszustand der erste Antriebsschub und der zweite Antriebsschub abhängig von der Vorgabeleistung bei einer absteigenden Vorgabeleistung derart relativ zueinander geregelt sind, dass zunächst das zweite Triebwerk mit einem absteigenden zweiten Antriebsschub geregelt wird und erst nach Erreichen eines zweiten unteren Grenzschubs des zweiten Triebwerks der erste Antriebsschub absteigend, jeweils bis zum Erreichen einem der Vorgabeleistung entsprechenden gemeinsamen Antriebsschub, geregelt wird.

In diesem Zusammenhang ist der jeweilige "untere Grenzschub" beispielsweise durch einen minimal verfügbaren Schub des zweiten Triebwerks oder durch einen beispielsweise durch Wartungsvorschriften, Betriebsvorschriften oder dergleichen festgelegten minimal zur Verfügung stehenden Schub definiert. Dabei kann beispielsweise auch ein unterer Grenzschub oberhalb eines Leerlaufschubs des zweiten Triebwerks liegen, wenn beispielsweise eine zu schnelle oder zu weite Leistungsreduzierung des Triebwerks zu einem Ausfall des Triebwerks oder zu Betriebsstörungen bei gegebenen Strömungszuständen führen würde.

In einer Ausführungsform ist dabei der erste obere Grenzschub gleich dem ersten Maximalschub oder einem für den jeweiligen Betriebszustand sicheren oberen Grenzschub des ersten Triebwerks. Ebenso kann der zweite untere Grenzschub dem zweiten Leerlaufschub entsprechen.

Ein "für einen jeweiligen Betriebszustand sicherer oberer Grenzschub" ist beispielsweise ein aufgrund von Luftdichte, Temperatur und/oder Wetterbedingungen verfügbarer maximaler oberer Grenzschub, der beispielsweise unterhalb des verfügbaren Maximalschubs oder des nominellen Maximalschubs des Triebwerks liegt. Beispielsweise ist ein solcher sicherer oberer Grenzschub auch dadurch definiert, dass beispielsweise durch die Berechnung von Flugparametern für einen Startablauf in Abhängigkeit von einer zur Verfügung stehenden Startbahnstrecke eine entsprechende triebwerksschonende maximale Leistung von beispielsweise nur 95 % des Maximalschubs ergibt.

Um auch außerhalb des Normalbetriebszustands mittels der Leistungsregeleinheit einen sicheren Flugbetrieb zu gewährleisten, erfolgt bei Auftreten einer mittels eines Störungssensors erkannten Störung am ersten Triebwerk oder am zweiten Triebwerk ein Umschalten der Regelungseinrichtung in einen Störungsbetriebszustand, wobei im Störungsbetriebszustand der jeweilige Antriebsschub des jeweiligen nicht gestörten Triebwerks bis zum Erreichen eines der Vorgabeleistung entsprechenden gemeinsamen Antriebsschub oder bis zu einem verfügbaren Antriebsschub entsprechend eines jeweiligen Maximalschubs des jeweiligen nicht gestörten Triebwerks geregelt wird.

Eine "Störung" beschreibt dabei beispielsweise jede vorhersehbare oder auch nicht vorhersehbare Einflussgröße auf die Betriebssicherheit eines jeweiligen Triebwerks, sodass beispielsweise ein Triebwerksausfall durch Vogelschlag, ein Triebwerksausfall durch ein Schadfeuer im Triebwerk, eine Reduzierung der Triebwerksleistung aufgrund von Temperaturproblemen oder dergleichen bezeichnet sein kann. Eine solche Störung wird mittels eines "Störungssensors", also beispielsweise mittels eines Vibrationssensors, eines Temperatursensors, eines Flammensensors oder auch über eine komplexe Bewertung beispielsweise verfügbarer Betriebsparameter eines jeweiligen Triebwerks ermittelt.

Ein "Umschalten" in einen Störungsbetriebszustand beschreibt dabei ein Verhalten der Regelungseinrichtung, welche beispielsweise mittels einer entsprechenden Software realisiert ist, indem die Regelungseinrichtung entsprechend des dann gewählten Störungsbetriebszustandes handelt, also insbesondere abweichend vom Normalbetriebszustand.

Der Kerngedanke ist bei dieser Ausführungsform der Erfindung, dass ein nicht gestörtes Triebwerk, welches beispielsweise noch den jeweiligen Maximalschub zur Verfügung stellen kann, sodann automatisch mittels der Leistungsregeleinheit so angesteuert wird, dass der jeweilige Maximalschub zur Verfügung steht, wenn dieser benötigt wird und das gestörte Triebwerk keinen ausreichenden Schub mehr liefern kann. Auch dieser Zustand kann sodann von einer korrespondierend angeordneten adaptiven Leistungsmarkierung optisch und/oder haptisch angezeigt werden. Beispielsweise kann dies erfolgen, in dem ein Bewegungsweg der Eingabeeinrichtung auf einen dem temporär zur Verfügung stehenden Maximalschub entsprechenden Weg insbesondere haptisch fühlbar begrenzt wird.

In einer Ausführungsform ist der Eingabeeinrichtung eine Anzeigeeinrichtung zugeordnet, wobei mittels der Anzeigeeinrichtung eine Information bezüglich eines jeweiligen Betriebszustandes, eine Information eines verfügbaren maximalen Antriebsschubs und/oder eine Information über eine erkannte Störung anzeigbar ist.

So kann mittels der Anzeigeeinrichtung jeweils eine gegenüber der Rückmeldung der adaptiven Leistungsmarkierung erweiterte sogenannte "situation awareness" für beispielsweise einen Piloten geschaffen werden, indem beispielsweise angezeigt wird, welches der jeweiligen Triebwerke verfügbar ist, welcher Betriebszustand gewählt ist, ob beispielsweise Störungen eines oder mehrerer Triebwerke vorliegen und welcher Betriebszustand, nämlich beispielsweise der Normalbetriebszustand oder der Störungsbetriebszustand, derzeit gewählt und verfügbar ist.

Eine "Anzeigeeinrichtung" ist dabei jede Einrichtung, die geeignet ist, beispielsweise einem Bediener eine entsprechende Information zugänglich zu machen. In einer einfachen Ausführung kann die Anzeigeeinrichtung dabei eine Lampe oder eine Warnleuchte aufweisen, ebenso ist eine Anzeige mittels einer Textausgabe, einer Bildausgabe oder einer anderen Warnausgabe auf einem Display oder Bildschirm möglich.

In einer Ausführungsform ist die Eingabeeinrichtung eine Schubhebeleinheit, wobei die Schubhebeleinheit insbesondere eine Bremseinrichtung zum adaptiven Erschweren einer Bewegung eines Schubhebels der Schubhebeleinheit aufweist, wobei mittels der Bremseinrichtung insbesondere die adaptive Leistungsmarkierung, insbesondere haptisch fühlbar, realisiert ist.

Eine solche "Schubhebeleinheit" entspricht dabei beispielsweise einer üblichen Ausgestaltung einer entsprechenden Konsole in einem Luftfahrzeug, in der ein "Schubhebel", also beispielsweise ein um eine Rotationsachse beweglicher oder entlang einer Bahn verschiebbarer Hebel oder Knauf, angeordnet ist, dessen jeweilige Position mit einer Vorgabeleistung korrespondiert. Eine "Bremseinrichtung" ist dabei beispielsweise eine Rutschkupplung, welche eine Bewegung des Schubhebels entsprechend bremst oder erschwert, sodass die adaptive Leistungsmarkierung realisiert ist. Somit kann der Bediener anhand eines erschwerten Bewegens des Schubhebels in der Schubhebeleinheit erkennen, dass beispielsweise die adaptive Leistungsmarkierung erreicht und damit auch ein maximal verfügbarer Antriebsschub erreicht ist. Es sei in diesem Zusammenhang darauf hingewiesen, dass insbesondere ein einzelner Schubhebel in Zusammenhang mit der adaptiven Leistungsmarkierung ein Steuern von zwei Triebwerken oder mehreren Triebwerken ermöglicht, da auch an einem einzelnen Schubhebel der Betriebszustand der jeweiligen Triebwerke und/oder beispielsweise eines zur Verfügung stehenden Maximalschubs ersichtlich oder haptisch fühlbar ist.

In einem weiteren Aspekt wird die Aufgabe gelöst durch ein Antriebssystem mit einer Leistungsregeleinheit gemäß einer der vorherig ausgeführten Ausführungsformen, einem ersten Triebwerk und zumindest einem zweiten Triebwerk.

Insbesondere bei der Bereitstellung eines Antriebssystems, bestehend aus zumindest einer Leistungsregeleinheit und entsprechenden Triebwerken, kann eine integrale Lösung für den sicheren, ökonomischen und wartungsfreundlichen Betrieb eines entsprechenden Luftfahrzeugs zur Verfügung gestellt werden, wobei ein Bediener jederzeit über den Zustand der Triebwerke und/oder beispielsweise zur Verfügung stehenden Maximalschub in jedem Flugzustand informiert ist.

Das Antriebssystem kann dabei in einer Ausführungsform derart gestaltet sein, dass der erste Maximalschub des ersten Triebwerks maximal 90 %, 80 %, 70 %, 65 %, 55 %, 50 %, insbesondere 45 %, des zweiten Maximalschubs beträgt oder der zweite Maximalschub maximal 90 %, 80 %, 70 %, 65 %, 55 %, 50 %, insbesondere 45 %, des ersten Maximalschubs beträgt.

Durch diese Ausgestaltung, in der ein erstes Triebwerk oder ein zweites Triebwerk jeweils eine andere Maximalleistung, also einen abweichenden Maximalschub als das jeweilig andere Triebwerk, bereitstellen kann, kann beispielsweise für einen Startvorgang des Luftfahrzeuges das leistungsstärkere Triebwerk zunächst in seiner Leistungsfähigkeit vollständig ausgenutzt werden, bevor das leistungsschwächere Triebwerk genutzt wird. Ebenso ist es möglich, zunächst das leistungsschwächere Triebwerk voll auszunutzen und beispielsweise in einem Reiseflugzustand des Luftfahrzeuges mit diesem leistungsschwächeren Triebwerk ausreichend Schub für einen stationären Reiseflug bereitzustellen, wobei das jeweils leistungsstärkere Triebwerk sodann in einem Leerlauf betrieben wird, wodurch beispielsweise keine wartungsrelevanten Betriebsstunden aufaddiert werden. Ebenso ist in diesem Zusammenhang ein Umschalten der Regelungseinrichtung von beispielsweise dem Startzustand in den Reiseflugzustand abhängig von jeweiligen Flugparametern möglich. Die adaptive Leistungsmarkierung

Ebenso kann das Antriebssystem weitere Triebwerke aufweisen, welche dann dem ersten Triebwerk oder dem zweiten Triebwerk jeweils zugeordnet werden, sodass beispielsweise eine erste Gruppe von Triebwerken und eine zweite Gruppe von Triebwerken analog zum ersten Triebwerk und zum zweiten Triebwerk geregelt werden können.

In einem weiteren Aspekt wird die Aufgabe gelöst durch ein Luftfahrzeug mit einer Leistungsregeleinheit gemäß einer der vorherigen beschriebenen Ausführungsformen und/oder mit einem Antriebssystem gemäß der vorig beschriebenen Ausführungsform.

Ein solches Luftfahrzuge kann, beispielsweise wenn das erste Triebwerk und das zweite Triebwerk im Bereich einer Mittelebene des Luftfahrzeuges derart angeordnet sind, dass bei einem Triebwerksausfall nur geringe Giermomente um eine Hochachse des Luftfahrzeuges auftreten, besonders vorteilhaft betrieben werden, da beispielsweise eine entsprechende Schubdifferenz der jeweiligen Triebwerke auch im Normalbetrieb und unter Berücksichtigung der oben beschriebenen Regelungslogik keinerlei relevante Giermomente aufbringt. Ein Bediener ist dabei jederzeit in Kenntnis, welchen Betriebszustand die jeweiligen Triebwerke aufweisen und welcher Maximalschub jeweils zur Verfügung steht.

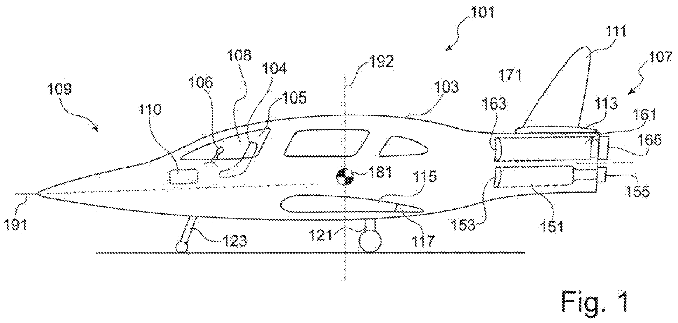

Im Weiteren wird die Erfindung anhand von Ausführungsbeispielen näher erläutert. Es zeigen
- Figur 1: eine schematische Darstellung eines Geschäftsflugzeuges in einer Seitenansicht,

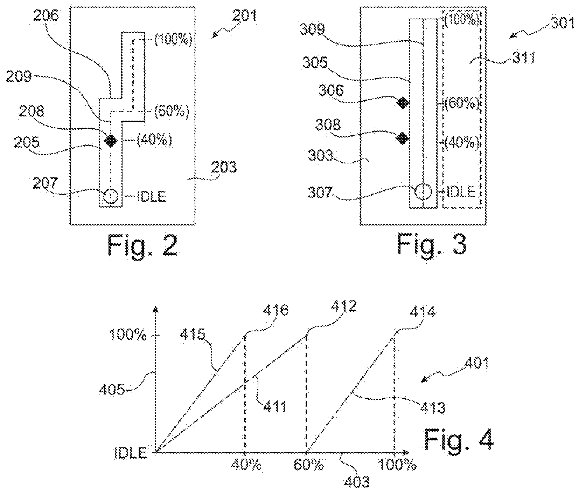

- Figur 2: eine schematische Darstellung einer Schubkonsole für ein Geschäftsflugzeug der Figur 1,
- Figur 3: eine schematische Darstellung einer alternativen Schubkonsole für das Geschäftsflugzeug der Figur 1, sowie
- Figur 4: ein Diagramm mit der Darstellung von Schubfunktionen verschiedener Triebwerke des Geschäftsflugzeugs der Figur 1.

Ein Geschäftsflugzeug 101 weist eine Rumpfstruktur 103 auf. Die Rumpfstruktur 103 dient als Teil des Tragwerkes des Geschäftsflugzeuges 101 und weist Scheiben 105 auf, die als Cockpitscheibe für ein Cockpit 108 dienen. Innerhalb des Cockpits 108 ist eine Schubkonsole 106 angeordnet, die von einem Piloten zum Vorgeben eines gewünschten Schubs bedient wird. Zur Regelung des Schubs dient ein FADEC-System 110, welches eine digitale, vollautomatische Triebwerkssteuerung aufweist (nur beispielhaft dargestellt). Das Geschäftsflugzeug 101 ist in einer üblichen Konfiguration mit einem Seitenleitwerk 111, einem Höhenleitwerk 113 und einer Tragfläche 115 als Tiefdecker mit konventionellem Leitwerk dargestellt. Das Seitenleitwerk 111 und das Höhenleitwerk 113 sind am Heck 107 angeordnet.

Die Tragfläche 115 weist Auftriebshilfen 117, also beispielsweise Landeklappen, zur Erhöhung des Auftriebs in bestimmten Flugsituationen wie dem Start und der Landung auf. Weiterhin weist das Geschäftsflugzeug 101 ein Hauptfahrwerk 121 und ein Bugfahrwerk 123 auf, welche jeweils einziehbar sind.

Im Heck 107 sind zwei Triebwerke, nämlich ein Triebwerk 151 mit einem Lufteinlass 153 und einer Düse 155 sowie ein Triebwerk 161 mit einem Lufteinlass 163 und einer Düse 165 angeordnet. Die Triebwerke 151 und 161 sind Mantelstromtriebwerke, die nach dem Prinzip einer Gasturbine mit zusätzlichem Mantelstrom-Fan arbeiten (nicht detailliert dargestellt). Dazu saugen die Triebwerke durch die entsprechenden Lufteinlässe 153 und 163 Luft ein, erhöhen die in der Luft enthaltene Energie durch eine Verbrennung in einer jeweiligen Brennkammer (nicht dargestellt) und stoßen entsprechende heiße und beschleunigte Abgase zusammen mit den beschleunigten Luftmassen des jeweiligen Mantelstrom-Fans durch die jeweilige Düse 155 und 165 aus, sodass Schub für das Geschäftsflugzeug 101 entsteht und dieses beschleunigen kann. Das Geschäftsflugzeug 101 wiegt in vollbeladener Startkonfiguration etwa 5.000 kg, was einer Gewichtskraft von etwa 49000N entspricht. Das Triebwerk 151 weist einen Maximalschub von etwa 1.5000N auf, wohingegen das Triebwerk 161 einen Maximalschub von 2.5000 N aufweist.

Somit ist das Triebwerk 151 mit seinem Maximalschub darauf ausgelegt, das Geschäftsflugzeug 101 insbesondere im Reiseflug sicher und effizient betreiben zu können, wohingegen das Triebwerk 161 mit seinem deutlich höheren Schub dazu verwendet wird, beispielsweise in Hot-And-High-Bedingungen und/oder bei besonders kurzen angestrebten Start- und Landestrecke eine ausreichende Leistungsfähigkeit des Geschäftsflugzeugs 101 bereitzustellen. Der Maximalschub des Triebwerks 151 ist dabei so gewählt, dass die für das Gesamtgewicht des Luftfahrzeuges notwendige Leistung für einen nicht mehr möglichen Startabbruch nach einer sogenannten Entscheidungsfähigkeit zulassungsgemäß vorhanden ist, um einen sicheren Steigflug des Geschäftsflugzeuges 101 sicherzustellen. Ebenso kann lediglich die Leistungsfähigkeit des Triebwerks 151 genutzt werden, wenn beispielsweise ausreichend Startbahn für einen langen Startablauf zur Verfügung steht. Das dann im Leerlauf befindliche Triebwerk 161 kann dann ohne Einfluss auf wartungsrelevante Betriebsstunden im Leerlauf verbleiben, zudem können entsprechende Kraftstoffmengen gespart werden. Die Triebwerke werden durch ein das FADEC-System 110 gesteuert, also eine autonome, volldigitale, elektronische Regelung für die beiden Triebwerke 151 und 161 abhängig von Eingaben des Piloten an der Schubkonsole 106 im Cockpit 108.

Das Geschäftsflugzeug 101 weist einen Schwerpunkt 181 auf, der vorliegend als Beispiel für einen Gewichtsschwerpunkt im beladenen und besetzten Zustand dient. Das Triebwerk 151 ist dabei in Längsrichtung entlang einer Längsachse 191 betrachtet leicht unterhalb des Schwerpunkts 181 angeordnet, das Triebwerk 161 oberhalb des Schwerpunkts 181. Beide Triebwerke 151 und 161 sind aus einer Draufsicht (nicht dargestellt) betrachtet symmetrisch entlang einer Mittelebene des Geschäftsflugzeuges 101 angeordnet, sodass bei unterschiedlichem Schub der Triebwerke 151 und 161 kein Giermoment um eine Hochachse 192 entstehen.

Eine Schubkonsole 201 zeigt eine beispielhafte Ausführung einer Schubkonsole, wie beispielsweise auch die Schubkonsole 106 ausgeführt sein kann. Die Schubkonsole 201 weist eine Frontplatte 203 auf, welche innerhalb des Cockpits des Geschäftsflugzeuges 101 für den Piloten bedienbar montiert ist. Innerhalb der Frontplatte 203 ist eine schlitzförmige Kulisse 205 eingebracht, in der ein einzelner Schubhebel 207 bewegbar ist. Der Schubhebel 207 ist dabei entlang eines Pfades 209 bewegbar, wobei der Pfad 209 mittels der Form der Kulisse 205 eine Verschwenkung 206 erfährt. Dabei wird der Schubhebel 207 ausgehend von einer Leerlaufposition ("Idle") bis zur Verschwenkung 206 bewegt, an dem etwa 60 % einer zur Verfügung stehenden Gesamtantriebsleistung für das Geschäftsflugzeug 101 zur Verfügung stehen. Nach dem Verschwenken des Schubhebels 207 entlang des Pfades 209, also einer merkbaren Unterbrechung einer geradlinigen Bewegung des Schubhebels 207, kann der Schubhebel dann weiter bis zu 100 % Triebwerksleistung bewegt werden.

Die bei der Verschwenkung 206 in Normalbetrieb anliegende Antriebsleistung von etwa 60 % entspricht der Maximalleistung des stärkeren Triebwerks 161, wobei die Differenz zwischen den 60 % Antriebsleistung und den maximal verfügbaren 100 % Antriebsleistung dem demgegenüber reduzierten Leistungsvermögen des Triebwerks 151 entspricht.

Weiterhin ist eine beispielhaft gekennzeichnete Sperre 208 bei etwa 40 % Triebwerksleistung vorgesehen, welche eine Bewegung des Schubhebels 207 an dieser Stelle bremsen kann. Somit wird für den Piloten bei Erhöhen der geforderten Leistung mittels des Schubhebels 207 eine fühlbare Sperre 208 bereitgestellt, welche dann aktiviert und spürbar ist, sofern beispielsweise das stärkere Triebwerk 161 gestört und nur noch die Antriebsleistung des schwächeren Triebwerks 151 zur Verfügung steht. Hierzu wird das Triebwerk 161 überwacht und eine Störung an die Steuerung der Schubkonsole 201 geleitet, sodass die Sperre 208, beispielsweise mittels einer Bremse, aktiviert werden kann und dem Piloten eine direkte haptische Rückmeldung über den zur Verfügung stehenden Schub liefert. Weiterhin kann auch die Verschwenkung 206 beispielsweise temporär gesperrt werden, um dem Piloten die mangelnde Verfügbarkeit, insbesondere auch zusätzlich zu einer Fehlermeldung auf einem Display im Cockpit, anzuzeigen.

Die entsprechenden Leistungsmarkierungen ("Idle", "40 %", "60 %" sowie "100 %") sind in der Frontplatte 203 aufgedruckt und mittels einer Hinterleuchtung (nicht dargestellt) markierbar, sodass im Normalbetrieb beispielsweise die Leistungsmarkierungen "Idle", "60 %" sowie "100 %" sichtbar sind, wohingegen bei einem gestörten Triebwerk 161 die Markierung "40 %" hinterleuchtet ist, beispielsweise in der Farbe Rot, um eine Störung und einen veränderten Betriebszustand, welcher auch Störungsbetriebszustand genannt wird, zu kennzeichnen.

Analog dazu ist eine alternative Schubkonsole 301 mit einer Frontplatte 303 versehen, wobei ein Schubhebel 307 in einer Kulisse 305 geführt wird. Die Kulisse 305 ist dabei geradlinig, sodass der Schubhebel 307 entlang eines geradlinigen Pfades 309 zwischen einer Leerlaufleistung und einer Maximalleistung bewegt werden kann. Analog zum vorigen Beispiel ist bei 40 % verfügbarer Gesamtleistung eine Raste 306 vorgesehen, wobei im Unterschied zur Verschenkung 206, welche mechanisch in der Frontplatte 203 eingebracht ist, bei der Schubkonsole 301 eine weitere Raste 308 vorgesehen ist. Die Rasten 306 und 308 sind analog zur Raste 208 als Bremse für den Schubhebel 307 ausgeführt. Die Funktion von den unterschiedlich verfügbaren Triebwerksleistungen ist analog zum vorigen Beispiel. Weiterhin ist in der Frontplatte 303 ein Display 311 vorgesehen, womit eine Anzeige der Kennzeichnungen ("Idle", "40 %", "60 %" sowie "100 %") sowie der jeweils verfügbaren Leistungen analog zum vorigen Beispiel darstellbar sind. Somit kann beispielsweise auch ein bei Erreichen des Störungsbetriebszustandes nicht mehr verfügbarer Leistungsbereich zwischen 40 % und 100 % im Hintergrund rot schraffiert werden, sodass ein Pilot zusätzlich zur dann aktivierten Raste 306, welche beispielsweise mittels einer elektrischen Bremse realisiert ist, und damit zusätzlich zur haptischen Rückmeldung auch eine optische Rückmeldung über verfügbare Leistungen der jeweiligen Triebwerke oder einer gesamt verfügbaren Antriebsschubleistung erhält.

Ein Diagramm 401 weist eine Abszisse 403 sowie eine Ordinate 405 auf. Das Diagramm 401 dient der Darstellung der unterschiedlichen Leistungen der Triebwerke in unterschiedlichen Betriebszuständen. Die Abszisse 403 stellt dabei die mittels des Schubhebels 207 oder 307 angeforderte Antriebsschubleistung, also die Vorgabeleistung, dar. Auf der Ordinate 405 ist die jeweilige Leistung des jeweiligen Triebwerks zwischen einer Leerlaufleistung ("Idle") sowie 100 % verfügbarer Leistung aufgetragen. In einem Normalbetriebszustand wird bei mittels des Schubhebels 207 oder 307 vorgegebener ansteigender Leistung zunächst das leistungsstärkere Triebwerk 161 gemäß der Schubfunktion 411 bis hin zu einem Maximalschub 412 angesteuert, womit dann 60 % der verfügbaren Gesamt-Antriebsleistung des Geschäftsflugzeugs 101 zur Verfügung stehen. Wird der Schubhebel sodann, also über die 60 %-Markierung, weiterbewegt, so wird auch das Triebwerk 151 gemäß der Schubfunktion 413 mit ansteigendem Schub bis zu einem Maximalschub 414 angesteuert, wobei das Triebwerk 161 dabei beim Maximalschub 412 verbleibt. Im umgekehrten Falle, also wenn der Schubhebel 207 oder 307 zurück in Richtung einer Leerlaufleistung bewegt wird, wird zunächst das Triebwerk 151 in seiner Leistung reduziert, bis Leerlaufleistung erreicht ist, erst danach wird das Triebwerk 161 vom Maximalschub 412 bis hin zu einer Leerlaufleistung geregelt.

Sofern beispielsweise das Triebwerk 161 gestört, durch einen Brand oder einen Schaden ausgefallen oder anderweitig nicht verfügbar ist, wird der Schubhebel 207 oder 307 von Leerlaufstellung bis hin zu einer höheren Leistung bewegt, wobei die Raste 208 oder 308 die maximal verfügbare Leistung markieren und für den Piloten fühlbar machen. Weiterhin zeigt die hinterleuchtete "40 %"-Anzeige in der Frontplatte 203 oder alternativ dazu die auf dem Display 311 dargestellte und beispielsweise hervorgehobene "40 %"-Markierung an, dass damit eine maximal verfügbare Leistung erreicht ist. In diesem Betriebszustand wird dann das Triebwerk 151 gemäß einer Schubfunktion 415 von Leerlaufleistung bis zu einem Maximalschub 416 geregelt, womit 40 % der verfügbaren Gesamt-Antriebsleistung des Geschäftsflugzeugs 101, beispielsweise für ein sicheres Rückkehren an einen Flughafen, erreicht werden.

### Bezugszeichenliste

- 101: Geschäftsflugzeug
- 103: Rumpfstruktur
- 104: Sitz
- 105: Scheibe
- 106: Schubkonsole
- 107: Heck
- 108: Cockpit
- 109: Bug
- 110: FADEC
- 111: Seitenleitwerk
- 113: Höhenleitwerk
- 115: Tragfläche
- 117: Auftriebshilfen
- 121: Hauptfahrwerk
- 123: Bugfahrwerk
- 151: Triebwerk
- 153: Lufteinlass
- 155: Düse
- 161: Triebwerk
- 163: Lufteinlass
- 165: Düse
- 181: Schwerpunkt
- 183: Spannweite
- 191: Längsachse
- 192: Hochachse
- 201: Schubkonsole
- 203: Frontplatte
- 205: Kulisse
- 206: Verschwenkung
- 207: Schubhebel
- 208: Sperre
- 209: Pfad
- 301: Schubkonsole
- 303: Frontplatte
- 305: Kulisse
- 306: Raste
- 307: Schubhebel
- 308: Raste
- 309: Pfad
- 311: Display
- 401: Diagramm
- 403: Abszisse
- 405: Ordinate
- 411: Schubfunktion
- 412: Maximalschub
- 413: Schubfunktion
- 414: Maximalschub
- 415: Schubfunktion
- 416: Maximalschub

## Patentansprüche

1. Leistungsregeleinheit (110) zum automatisierten Regeln eines Antriebs eines in einem Normalbetriebszustand befindlichen Luftfahrzeuges (101) mit einer Regelungseinrichtung (110) und einer Eingabeeinrichtung (106, 201, 301), wobei das Luftfahrzeug (101) zum Fliegen in Umgebungsluft mittels dynamischen Auftriebs zum Überwinden eines Eigengewichts ausgebildet ist, ein zum Erzeugen von einem ersten Antriebsschub eingerichtetes erstes Triebwerk (161) mit einem ersten Leerlaufschub und einem ersten Maximalschub (412) und zumindest ein zum Erzeugen von zweitem Antriebsschub eingerichtetes zweites Triebwerk (151) mit einem zweiten Leerlaufschub und einem zweiten Maximalschub (414) aufweist und mittels des jeweiligen Antriebsschubs relativ zur Umgebungsluft beschleunigbar ist und wobei mittels der Eingabeeinrichtung (106, 201, 301) eine Vorgabeleistung durch einen Bediener eingebbar ist, wobei die Regelungseinrichtung derart eingerichtet ist, dass im Normalbetriebszustand der erste Antriebsschub und der zweite Antriebsschub mittels der Regelungseinrichtung (110) abhängig von der Vorgabeleistung bei einer ansteigenden Vorgabeleistung derart relativ zueinander geregelt sind, dass zunächst das erste Triebwerk (161) mit einem ansteigenden ersten Antriebsschub geregelt wird und erst nach Erreichen eines ersten oberen Grenzschubs (412) des ersten Triebwerks (161) der zweite Antriebsschub ansteigend, jeweils bis zum Erreichen einem der Vorgabeleistung entsprechenden gemeinsamen Antriebsschub, geregelt wird, **dadurch gekennzeichnet, dass** die Eingabeeinrichtung (106, 201, 301) zumindest eine adaptive Leistungsmarkierung (208, 306, 308) aufweist, wobei die adaptive Leistungsmarkierung (208, 306, 308) oder die jeweilige adaptive Leistungsmarkierung (208, 306, 308) zum Ausgeben einer optischen und/oder einer haptischen Rückmeldung eines verfügbaren gemeinsamen Antriebsschubs, eines verfügbaren jeweiligen Maximalschubs des jeweiligen Triebwerks und/oder zum Ausgeben einer optischen und/oder einer haptischen Rückmeldung über das Vorliegen einer Störung eines jeweiligen Triebwerkes eingerichtet ist.

2. Leistungsregeleinheit gemäß Anspruch 1, **dadurch gekennzeichnet, dass** die Regelungseinrichtung (110) derart eingerichtet ist, dass im Normalbetriebszustand der erste Antriebsschub und der zweite Antriebsschub abhängig von der Vorgabeleistung bei einer absteigenden Vorgabeleistung derart relativ zueinander geregelt sind, dass zunächst das zweite Triebwerk (151) mit einem absteigenden zweiten Antriebsschub geregelt wird und erst nach Erreichen eines zweiten unteren Grenzschubs des zweiten Triebwerks (151) der erste Antriebsschub absteigend, jeweils bis zum Erreichen einem der Vorgabeleistung entsprechenden gemeinsamen Antriebsschub, geregelt wird.

3. Leistungsregeleinheit gemäß Anspruch 1 oder 2, **dadurch gekennzeichnet, dass** der erste obere Grenzschub dem ersten Maximalschub (412) oder einem für einen jeweiligen Betriebszustand sicheren oberen Grenzschub des ersten Triebwerks entspricht und/oder dass der zweite untere Grenzschub dem zweiten Leerlaufschub entspricht.

4. Leistungsregeleinheit gemäß einem der vorherigen Ansprüche, **dadurch gekennzeichnet, dass** bei Auftreten einer mittels eines Störungssensors erkannten Störung am ersten Triebwerk (161) oder am zweiten Triebwerk (151) ein Umschalten der Regelungseinrichtung in einen Störungsbetriebszustand erfolgt und im Störungsbetriebszustand der jeweilige Antriebsschub des jeweiligen nicht gestörten Triebwerks bis zum Erreichen eines der Vorgabeleistung entsprechenden gemeinsamen Antriebsschubs oder bis zu einem verfügbaren Antriebsschub entsprechend eines jeweiligen Maximalschubs (412, 414) des jeweiligen nicht gestörten Triebwerks, geregelt wird.

5. Leistungsregeleinheit gemäß einem der vorherigen Ansprüche, **dadurch gekennzeichnet, dass** der Eingabeeinrichtung (106, 201, 301) eine Anzeigeeinrichtung (311) zugeordnet ist, wobei mittels der Anzeigeeinrichtung (311) eine Information bezüglich eines jeweiligen Betriebszustandes, eine Information bezüglich eines verfügbaren maximalen Antriebsschubs und/oder eine Information über eine erkannte Störung anzeigbar ist.

6. Leistungsregeleinheit gemäß einem der vorherigen Ansprüche, **dadurch gekennzeichnet, dass** die Eingabeeinrichtung (106, 201, 301) eine Schubhebeleinheit (106, 201, 301) ist, wobei die Schubhebeleinheit (106, 201, 301) insbesondere eine Bremseinrichtung (208, 306, 308) zum adaptiven Erschweren einer Bewegung eines Schubhebels (207, 307) der Schubhebeleinheit (106, 201, 301) aufweist, wobei mittels der Bremseinrichtung (208, 306, 308) insbesondere die adaptive Leistungsmarkierung (208, 306, 308) realisiert ist.

7. Antriebssystem (110, 151, 161) mit einer Leistungsregeleinheit (110) gemäß einem der vorherigen Ansprüche, einem ersten Triebwerk (161) und zumindest einem zweiten Triebwerk (151).

8. Antriebssystem gemäß Anspruch 7, **dadurch gekennzeichnet, dass** der erste Maximalschub maximal 90%, 80%, 70%, 65%, 55%, 50%, insbesondere 45% des zweiten Maximalschubs beträgt oder der zweite Maximalschub maximal 90%, 80%, 70%, 65%, 55%, 50%, insbesondere 45% des ersten Maximalschubs beträgt.

9. Luftfahrzeug (101) mit einer Leistungsregeleinheit (110) gemäß einem der Ansprüche 1 bis 6 und/oder mit einem Antriebssystem (110, 151, 161) gemäß einem der Ansprüche 7 oder 8.

## Claims

1. Power control unit (110) for the automated control of a propulsion of an aircraft (101) located in a normal operating state, having a control device (110) and an input device (106, 201, 301), wherein the aircraft (101) is configured for flying in ambient air by means of dynamic lift for overcoming its own weight, has a first engine (161), configured for generating a first propulsion thrust, with a first idle thrust and a first maximum thrust (412), and at least one second engine (151), configured for generating second propulsion thrust, with a second idle thrust and a second maximum thrust (414), and is accelerable relative to the ambient air by means of the respective propulsion thrust, and wherein a specified power can be input by an operator by means of the input device (106, 201, 301), wherein the control device is configured such that, in the normal operating state, the first propulsion thrust and the second propulsion thrust are controlled relative to one another by means of the control device (110) depending on the specified power, in the case of an increasing specified power, in such a way that initially the first engine (161) is controlled with an increasing first propulsion thrust and only after reaching a first upper limit thrust (412) of the first engine (161) is the second propulsion thrust controlled in an increasing manner, respectively until reaching a common propulsion thrust corresponding to the specified power, **characterized in that** the input device (106, 201, 301) has at least one adaptive power marking (208, 306, 308), wherein the adaptive power marking (208, 306, 308) or the respective adaptive power marking (208, 306, 308) is configured for outputting an optical and/or a haptic feedback of an available common propulsion thrust, of an available respective maximum thrust of the respective engine, and/or for outputting an optical and/or a haptic feedback regarding the presence of a fault of a respective engine.

2. Power control unit according to claim 1, **characterized in that** the control device (110) is configured such that, in the normal operating state, the first propulsion thrust and the second propulsion thrust are controlled relative to one another depending on the specified power, in the case of a decreasing specified power, in such a way that initially the second engine (151) is controlled with a decreasing second propulsion thrust and only after reaching a second lower limit thrust of the second engine (151) is the first propulsion thrust controlled in a decreasing manner, respectively until reaching a common propulsion thrust corresponding to the specified power.

3. Power control unit according to claim 1 or 2, **characterized in that** the first upper limit thrust corresponds to the first maximum thrust (412) or to an upper limit thrust of the first engine that is safe for a respective operating state, and/or **in that** the second lower limit thrust corresponds to the second idle thrust.

4. Power control unit according to one of the preceding claims, **characterized in that**, upon occurrence of a fault detected by means of a fault sensor at the first engine (161) or at the second engine (151), switching of the control device into the fault operating state takes place, and, in the fault operating state, the respective propulsion thrust of the respective non-faulty engine is controlled until reaching a common propulsion thrust corresponding to the specified power or up to an available propulsion thrust corresponding to a respective maximum thrust (412, 414) of the respective non-faulty engine.

5. Power control unit according to one of the preceding claims, **characterized in that** a display device (311) is associated with the input device (106, 201, 301), wherein information relating to a respective operating state, information relating to an available maximum propulsion thrust, and/or information about a detected fault can be displayed by means of the display device (311).

6. Power control unit according to one of the preceding claims, **characterized in that** the input device (106, 201, 301) is a thrust lever unit (106, 201, 301), wherein the thrust lever unit (106, 201, 301) in particular has a braking device (208, 306, 308) for adaptively impeding a movement of a thrust lever (207, 307) of the thrust lever unit (106, 201, 301), wherein in particular the adaptive power marking (208, 306, 308) is realized by means of the braking device (208, 306, 308).

7. Propulsion system (110, 151, 161) having a power control unit (110) according to one of the preceding claims, a first engine (161), and at least one second engine (151).

8. Propulsion system according to claim 7, **characterized in that** the first maximum thrust amounts to at most 90%, 80%, 70%, 65%, 55%, 50%, in particular 45%, of the second maximum thrust, or the second maximum thrust amounts to at most 90%, 80%, 70%, 65%, 55%, 50%, in particular 45%, of the first maximum thrust.

9. Aircraft (101) having a power control unit (110) according to one of claims 1 to 6, and/or having a propulsion system (110, 151, 161) according to one of claims 7 or 8.

## Revendications

1. Unité de régulation de puissance (110) destinée à réguler de manière automatisée une propulsion d'un aéronef (101) se trouvant dans un état de fonctionnement normal, comprenant un dispositif de régulation (110) et un dispositif d'entrée (106, 201, 301), dans laquelle l'aéronef (101) est conçu pour voler dans l'air ambiant au moyen d'une portance dynamique afin de surmonter son propre poids, comporte un premier moteur (161), configuré pour générer une première poussée propulsive, avec une première poussée de ralenti et une première poussée maximale (412), et au moins un deuxième moteur (151), configuré pour générer une deuxième poussée propulsive, avec une deuxième poussée de ralenti et une deuxième poussée maximale (414), et peut être accéléré par rapport à l'air ambiant au moyen de la poussée propulsive respective, et dans laquelle une puissance de consigne peut être entrée par un opérateur au moyen du dispositif d'entrée (106, 201, 301), dans laquelle le dispositif de régulation est configuré de telle sorte que, dans l'état de fonctionnement normal, la première poussée propulsive et la deuxième poussée propulsive sont régulées l'une par rapport à l'autre au moyen du dispositif de régulation (110) en fonction de la puissance de consigne, en cas de puissance de consigne croissante, de telle manière que, tout d'abord, le premier moteur (161) est régulé avec une première poussée propulsive croissante et que ce n'est qu'après l'atteinte d'une première poussée limite supérieure (412) du premier moteur (161) que la deuxième poussée propulsive est régulée de manière croissante, respectivement jusqu'à l'atteinte d'une poussée propulsive commune correspondant à la puissance de consigne, **caractérisée en ce que** le dispositif d'entrée (106, 201, 301) comporte au moins un marquage de puissance adaptatif (208, 306, 308), dans laquelle le marquage de puissance adaptatif (208, 306, 308) ou le marquage de puissance adaptatif respectif (208, 306, 308) est configuré pour émettre un retour optique et/ou haptique d'une poussée propulsive commune disponible, d'une poussée maximale respective disponible du moteur respectif et/ou pour émettre un retour optique et/ou haptique concernant la présence d'un défaut d'un moteur respectif.

2. Unité de régulation de puissance selon la revendication 1, **caractérisée en ce que** le dispositif de régulation (110) est configuré de telle sorte que, dans l'état de fonctionnement normal, la première poussée propulsive et la deuxième poussée propulsive sont régulées l'une par rapport à l'autre en fonction de la puissance de consigne, en cas de puissance de consigne décroissante, de telle manière que, tout d'abord, le deuxième moteur (151) est régulé avec une deuxième poussée propulsive décroissante et que ce n'est qu'après l'atteinte d'une deuxième poussée limite inférieure du deuxième moteur (151) que la première poussée propulsive est régulée de manière décroissante, respectivement jusqu'à l'atteinte d'une poussée propulsive commune correspondant à la puissance de consigne.

3. Unité de régulation de puissance selon la revendication 1 ou 2, **caractérisée en ce que** la première poussée limite supérieure correspond à la première poussée maximale (412) ou à une poussée limite supérieure du premier moteur sûre pour un état de fonctionnement respectif, et/ou **en ce que** la deuxième poussée limite inférieure correspond à la deuxième poussée de ralenti.

4. Unité de régulation de puissance selon l'une des revendications précédentes, **caractérisée en ce que**, lors de l'apparition d'un défaut détecté au moyen d'un capteur de défaut sur le premier moteur (161) ou sur le deuxième moteur (151), un basculement du dispositif de régulation dans l'état de fonctionnement en défaut a lieu et, dans l'état de fonctionnement en défaut, la poussée propulsive respective du moteur respectif non défectueux est régulée jusqu'à l'atteinte d'une poussée propulsive commune correspondant à la puissance de consigne ou jusqu'à une poussée propulsive disponible correspondant à une poussée maximale respective (412, 414) du moteur respectif non défectueux.

5. Unité de régulation de puissance selon l'une des revendications précédentes, **caractérisée en ce qu'**un dispositif d'affichage (311) est associé au dispositif d'entrée (106, 201, 301), dans laquelle une information relative à un état de fonctionnement respectif, une information relative à une poussée propulsive maximale disponible et/ou une information concernant un défaut détecté peut être affichée au moyen du dispositif d'affichage (311).

6. Unité de régulation de puissance selon l'une des revendications précédentes, **caractérisée en ce que** le dispositif d'entrée (106, 201, 301) est une unité de manette de poussée (106, 201, 301), dans laquelle l'unité de manette de poussée (106, 201, 301) comporte en particulier un dispositif de freinage (208, 306, 308) destiné à rendre adaptativement plus difficile un mouvement d'une manette de poussée (207, 307) de l'unité de manette de poussée (106, 201, 301), dans laquelle le marquage de puissance adaptatif (208, 306, 308) est en particulier réalisé au moyen du dispositif de freinage (208, 306, 308).

7. Système de propulsion (110, 151, 161) comprenant une unité de régulation de puissance (110) selon l'une des revendications précédentes, un premier moteur (161) et au moins un deuxième moteur (151).

8. Système de propulsion selon la revendication 7, **caractérisé en ce que** la première poussée maximale s'élève au maximum à 90 %, 80 %, 70 %, 65 %, 55 %, 50 %, en particulier 45 %, de la deuxième poussée maximale, ou **en ce que** la deuxième poussée maximale s'élève au maximum à 90 %, 80 %, 70 %, 65 %, 55 %, 50 %, en particulier 45 %, de la première poussée maximale.

9. Aéronef (101) comprenant une unité de régulation de puissance (110) selon l'une des revendications 1 à 6, et/ou comprenant un système de propulsion (110, 151, 161) selon l'une des revendications 7 ou 8.
